(19)

**Europäisches Patentamt**

**European Patent Office**

**Office européen des brevets**

(11)     **EP 4 676 029 A1**

(12)     **EUROPEAN PATENT APPLICATION**

(43) Date of publication:
07.01.2026  Bulletin 2026/02

(21) Application number: 24306066.2

(22) Date of filing: 01.07.2024

(51) International Patent Classification (IPC):
*H04N 19/105* $^{(2014.01)}$     *H04N 19/11* $^{(2014.01)}$

(52) Cooperative Patent Classification (CPC):
H04N 19/11; H04N 19/105; H04N 19/176;
H04N 19/593

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS 75017 Paris (FR)**

(72) Inventors:
• **NASER, Karam**
  **35250 MOUAZE (FR)**
• **LE LEANNEC, Fabrice**
  **35830 BETTON (FR)**
• **CHEN, Ya**
  **35700 RENNES (FR)**
• **GALPIN, Franck**
  **35235 THORIGNE-FOUILLARD (FR)**

(74) Representative: **Vossius & Partner Patentanwälte Rechtsanwälte mbB Siebertstraße 3 81675 München (DE)**

(54)     **TEMPLATE BASED MIP IMPROVEMENT WITH BLOCK VECTOR BASED PREDICTION**

(57)     Methods and apparatus are provided for encoding and subsequent decoding using template based MIP improvement with block vector based prediction. In one embodiment, predictions of two predictors are blended using weighting after an analysis of neighboring block vectors determines the best predictors. In another embodiment, the previous embodiment is supplemented by a template analysis that yields a block vector predictor that is also blended with two other predictors. At decoding, a corresponding prediction is performed.

300

Figure 3

EP 4 676 029 A1

**Description**

TECHNICAL FIELD

At least one of the present embodiments generally relates to a method or an apparatus for video compression using block vector based prediction.

BACKGROUND

The general aspects described herein relate to approaches for video compression and decompression, and particularly to improvements of a block vector based prediction method.

SUMMARY

At least one of the present embodiments generally relates to a method or an apparatus for compressing or decompressing a set of images or videos using block vector prediction.

According to a first aspect, there is provided a method. The method comprises steps for performing an analysis of block vectors neighboring a current video block; determining a prediction by blending predictions of at least two predictors using weights based on said analysis; and, encoding the current block using the determined prediction.

According to a second aspect, there is provided another method. The method comprises steps for performing an analysis of block vectors neighboring a current video block; determining a prediction by blending predictions of at least two predictors using weights based on said analysis; and, decoding the current block using the determined prediction.

According to another aspect, there is provided an apparatus. The apparatus comprises a processor and a memory. The processor can be configured to operate on digital video data according to the aforementioned methods.

According to another aspect, there is provided an apparatus. The apparatus comprises a processor and a memory. The processor can be configured to encode a block of video or decode video data by executing any of the aforementioned methods.

According to another general aspect of at least one embodiment, there is provided a device comprising an apparatus according to any of the decoding embodiments; and at least one of (i) an antenna configured to receive a signal, the signal including the video block, (ii) a band limiter configured to limit the received signal to a band of frequencies that includes the video block, or (iii) a display configured to display an output representative of the video block.

According to another general aspect of at least one embodiment, there is provided a non-transitory computer readable medium containing data content generated according to any of the described encoding embodiments or variants.

According to another general aspect of at least one embodiment, there is provided a signal comprising video data generated according to any of the described encoding embodiments or variants.

According to another general aspect of at least one embodiment, video data or a bitstream is formatted to include data content generated according to any of the described encoding embodiments or variants.

According to another general aspect of at least one embodiment, there is provided a computer program product comprising instructions which, when the program is executed by a computer, cause the computer to carry out any of the described decoding embodiments or variants.

These and other aspects, features and advantages of the general aspects will become apparent from the following detailed description of exemplary embodiments, which is to be read in connection with the accompanying drawings.

BRIEF DESCRIPTION OF THE DRAWINGS

Figure 1 illustrates the 67 intra prediction modes in VVC and ECM.
Figure 2 illustrates an example of template matching performed on a search area around an initial motion vector (MV).
Figure 3 illustrates one embodiment of a first method under the described aspects.
Figure 4 illustrates one embodiment of a second method under the described aspects
Figure 5 illustrates one embodiment of an apparatus under the described aspects.
Figure 6 illustrates a standard, generic, video compression scheme.
Figure 7 illustrates a standard, generic, video decompression scheme.
Figure 8 illustrates a processor-based system for encoding/decoding under the general described aspects.

DETAILED DESCRIPTION

The embodiments described here are in the field of video compression.

To achieve high compression efficiency, image and video coding schemes usually employ block-based prediction, including motion vector prediction, and transform to leverage spatial and temporal redundancy in the video content. Generally, intra or inter prediction is used to exploit the intra or inter frame correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

In the HEVC (High Efficiency Video Coding) video compression standard, motion compensated temporal prediction is employed to exploit the redundancy that exists between successive pictures of a video.

This invention is in the field of video compression. It is about improving the intra prediction process by combining block vector-based prediction along with matrix based intra prediction (MIP). Specifically, a new mode under study, known as derived MIP with fusion (DMIP JVET-AH0058) proposes deriving the best two MIP modes from the template analysis. The two modes are adaptively blended to generate the final prediction. This invention proposes further including block vector based prediction to as another predictor to improve the overall prediction quality.


**Intra Prediction in ECM 10**

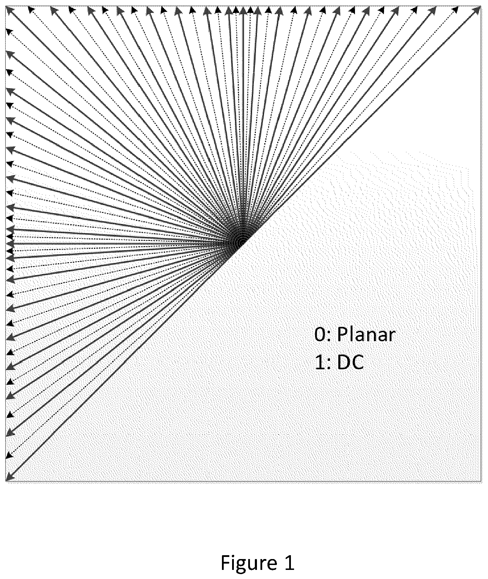

To capture the arbitrary edge directions presented in natural video, ECM features 65 directional intra prediction modes as in WC. For predicting blocks with smoothly varying textures, VVC uses the PLANAR and DC modes, as shown in Figure 1.

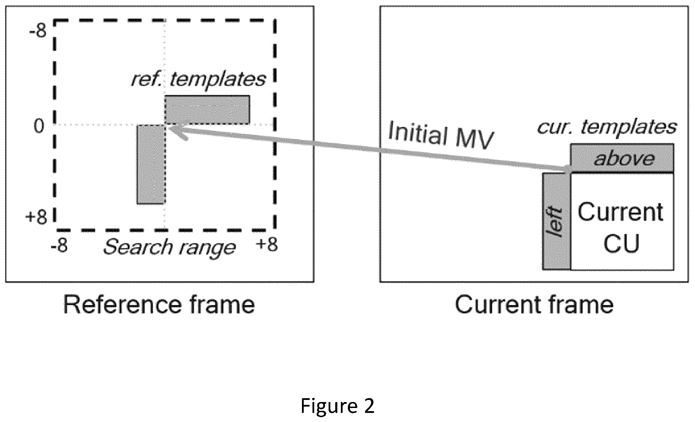

When DIMD (Decoder Side Intra Mode Derivation) is applied, up to five intra modes are derived from the gradients in a template of reconstructed neighbor samples, and those five predictors are combined with the planar mode predictor with weights derived from the histogram of gradients. Figure 2 illustrates an example of template matching performed on a search area around an initial motion vector.

When used, TIMD (Template-based Intra Mode Derivation) is applied the same way on the encoder and decoder sides. For each intra prediction mode in the MPM list of the current block, if needed, supplemented with default modes, it computes a prediction of the template of the block from the decoded reference samples of the template, and the SATD (Sum of Absolute Transformed Differences) between this prediction and the template of the block is calculated. The two intra prediction modes with the minimum SATDs are selected as the TIMD modes.

Intra template matching prediction (IntraTMP) is an intra prediction mode that copies a prediction block from the reconstructed part of the current frame, whose L-shaped template most closely matches the current template. For a predefined search range, the encoder searches for the most similar template to the current template in a reconstructed part of the current frame and uses the corresponding block as a prediction block. The encoder then signals the usage of this mode, and the same prediction operation is performed at the decoder side.

In Intra Block Copy (IBC), the prediction is obtained from a reference block within the same picture indicated by a block vector.

To predict the samples of a block of width W and height H, Matrix weighted Intra Prediction (MIP) takes one line of H reconstructed neighboring boundary samples left of the block and one line of W reconstructed neighboring boundary samples above the block as input. The generation of the prediction signal is based on averaging neighboring samples, matrix vector multiplication with the averaged samples and linear interpolation.

Spatial geometric partitioning mode (SGPM) is an intra mode that resembles the inter coding tool of geometric partitioning mode (GPM), where the two prediction parts are generated from intra predicted process. In this mode, a candidate list is built with each entry containing one partition split and two intra prediction modes. The selected candidate index is signaled.


**Auto-relocated Block Vector Prediction**

Auto-relocated block vector prediction (AR-BVP) candidates are new candidates that are added to the existing merge list candidates. These candidates are generated by performing vector addition of the block vector of a merge candidate and the block vector of any nearby CU coded in IntraTMP or IBC. Six nearby positions of CU's are predefined:

   1- Center Position: Position referenced by the current block vector
   2- Top Left
   3- Top Right
   4- Bottom Left
   5- Bottom Right

6- Left Position

These new are added to the merge candidate list, and evaluated with template matching in IntraTMP mode.

In JVET-AH0274, the use of ARBVP is further extended to SGPM, DIMD and TIMD. Specifically, these modes use the merge list block vectors and evaluate, along with regular intra modes, to select best mode(s) for the final prediction. It is noted that the original merge list can have up to 50 block vectors. Adding BVP, the number can be multiplied by 6. This is because each candidate can generate more 6 candidates with ARBVP process. This is the worst-case scenario that can be far from the actual observed number of candidates.

**Derived MIP modes with Fusion (DMIP: copied from JVET-AH0058)**

Similar to other template tools, the top and left neighboring areas are used as templates to derive the MIP modes and transposed flags for the current block, where the size of templates is width×2 and 2×height. The proposed method first derives two best candidates {MIP modes, transposed flag} with the smallest SATD cost over the template areas, and then it fuses the two derived MIP predictions with equal weights to produce a prediction for the current block.

This fusion process is applied to the current coding unit only when the SATD cost of the best candidate is larger than half of the cost of the second-best candidate. In the case where the SATD cost of the best candidate is smaller than half of the cost of the second-best candidate, the prediction is produced using only the best candidate without fusion. The fusion weights are calculated by their template costs as follow:

$$weight_{best} = SATDcost_{secBest} / (SATDcost_{best} + SATDcost_{secBest})$$

$$weight_{secBest} = 1 - weight_{best}$$

The combination of block vector-based (BV) prediction and other intra prediction modes is known to provide coding benefits. In ECM, both DIMD and SGPM consider BV prediction in their template analysis.

In SGPM, the block vectors from neighboring PU's are examined by template cost, and the best 6 are selected. These 6 candidates are compared to other predefined list of intra modes and split directions and to construct SGPM candidate list.

In DIMD, the block vectors from neighboring PU's are examined by template cost, along with planar mode. The best predictor is selected to be blended with the rest of 5 intra prediction modes.

In TIMD, the block vectors from neighboring PU's are examined by template cost, along with all TIMD angular modes. The template analysis yield up to three modes to be combined for the final prediction, where the modes can be regular modes or BV ones.

All the above is evidence of the powerfulness of the BV prediction and its usefulness in combination with other intra modes. This is the main motivation of the described embodiments to also include BV in the template analysis part of DMIP.

The described embodiments propose combining BV prediction with MIP. It is done by including BV predictors from neighboring blocks inside the template analysis part of the new derived MIP mode (DMIP).

**Embodiment 1: Including BV from Neighboring Modes**

In this embodiment, the block vectors are gathered from all/some of the neighboring blocks. These neighboring blocks are either coded directly with block vectors (IBC/IntraTMP), or indirectly containing block vectors combined with intra modes. These blocks corresponds to DIMD, TIMD, SGPM and DMIP that contain block vectors.

Each block vector is considered as a predictor, where the prediction is performed by simply copying reference samples referred by the block vector. Therefore, the same template analysis can be carried out with these block vectors. That is, the template cost is computed for all available MIP modes and all available BV predictors. The best two predictors are selected, which can be MIP or BV, and the fusion weights are computed. The final prediction is done by generating the two predictions and blending them according to fusion weights.

**Embodiment 2: Adding BV as a third mode**

Alternatively, to embodiment 1, the template analysis part is not modified with respect to MIP. That is, the same analysis is performed to find the best two MIP modes. However, BV can be considered as a third predictor in certain cases. To do so, the template analysis is employed to yield the BV predictor among the available BVs from the neighboring blocks. This BV is the one which minimizes the template cost. Then, the template cost of this BV is compared to the template costs of the MIP modes. The following strategies can be considered:

1- If the BV template cost is less than the best cost of the two MIP modes, consider BV as a third predictor. Otherwise, BV is not used and the DMIP prediction is unchanged.

2- If the BV template cost is not larger than 10% of the worst cost of the two MIP modes, consider BV as a third predictor. Otherwise, BV is not used and the DMIP prediction is unchanged.

If BV is considered as a third predictor, the final prediction is generated by blending all predictions generated from the 2 MIP modes and the BV mode. The blending weight can simply be equal, or can be adaptive with respect to the template cost. The adaptation is made in such a way that the less the distance, the higher the blending weight is.

**Variants to the BV derivation process**

Note the BV used in any of the two above embodiment may be obtained from a neighboring block of current CU as stated above, or may alternatively involve the BV predictor (BVP) candidate list construction process of the IBC (Intra Block Copy) prediction mode, or alternatively the BVP candidate list construction of the Intra-TMP prediction mode.

The list used may thus be sorted through a template matching cost criteria for instance. The BV used in the proposed MIP-BV blending process may thus be derived from a neighboring, non-adjacent, or also a history-based list of BV predictor (as used in IBC).

Note also that the BV-based prediction block to be blended with MIP according to present invention may be produced not only through reference block copy, but may also involve interpolation (in case of a fractional block vector pointing to a subpixel position in current picture). It may also include a prediction enhancement step like the LIC (Local Illumination Compensation, used in IBC and Itmp) or FLM (Linear Convolution Filtering used in IBC and Itmp). In this case, the LIC or FLM usage may be derived from in association with the derived BV.

Finally, BV-based prediction may also include a Rotation/Flip of the reference block pointed to by the derived BV, in case this BV is obtained from a previously coded CU in so-called RRIBC prediction mode (RRIBC meaning Rotated Reference Intra Block Copy).

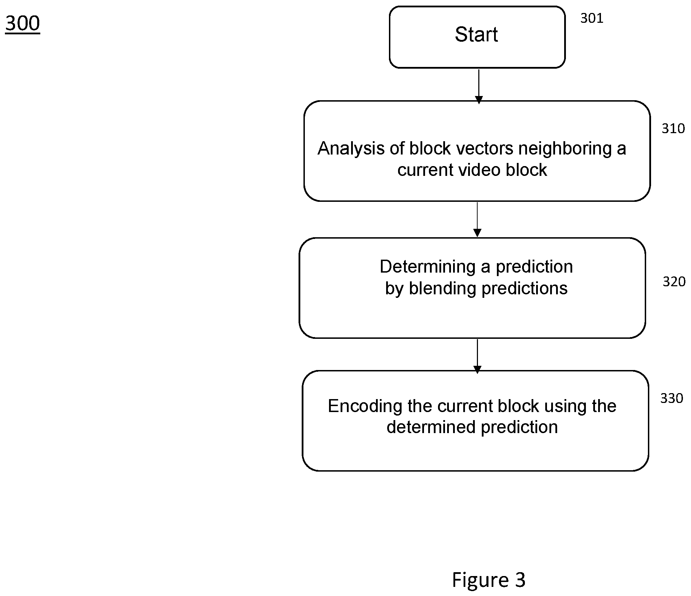

One embodiment of a method 300 under the general aspects described here is shown in Figure 3. The method commences at start block 301 and control proceeds to block 310 for performing an analysis of block vectors neighboring a current video block. Control proceeds from block 310 to block 320 for determining a prediction by blending predictions of at least two predictors using weights based on said analysis. Control proceeds from block 320 to block 330 for encoding the current block using the determined prediction.

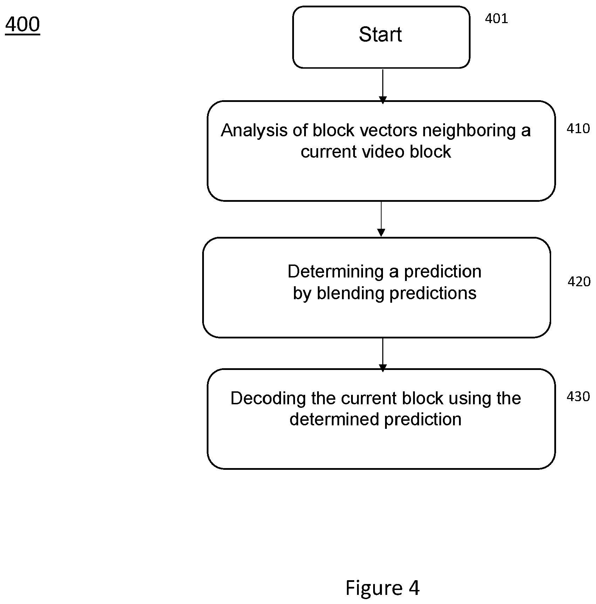

One embodiment of a method 400 under the general aspects described here is shown in Figure 4. The method commences at start block 401 and control proceeds to block 410 for performing an analysis of block vectors neighboring a current video block. Control proceeds from block 410 to block 420 for determining a prediction by blending predictions of at least two predictors using weights based on said analysis. Control proceeds from block 420 to block 430 for decoding the current block using the determined prediction.

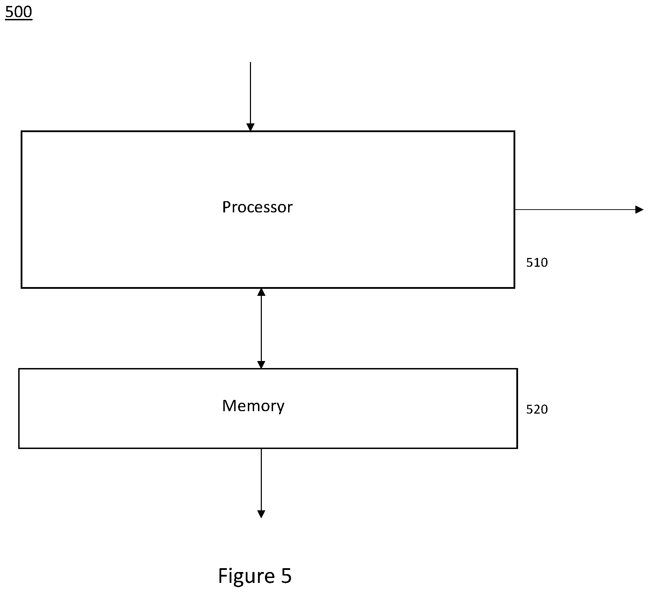

Figure 5 shows one embodiment of an apparatus 500 for encoding, decoding, compressing or decompressing, or filtering of video data using the aforementioned methods. The apparatus comprises Processor 510 and can be interconnected to a memory 520 through at least one port. Both Processor 510 and memory 520 can also have one or more additional interconnections to external connections.

Processor 510 is also configured to either insert or receive information in a bitstream and, either compressing, encoding, or decoding using any of the described aspects.

The embodiments described here include a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

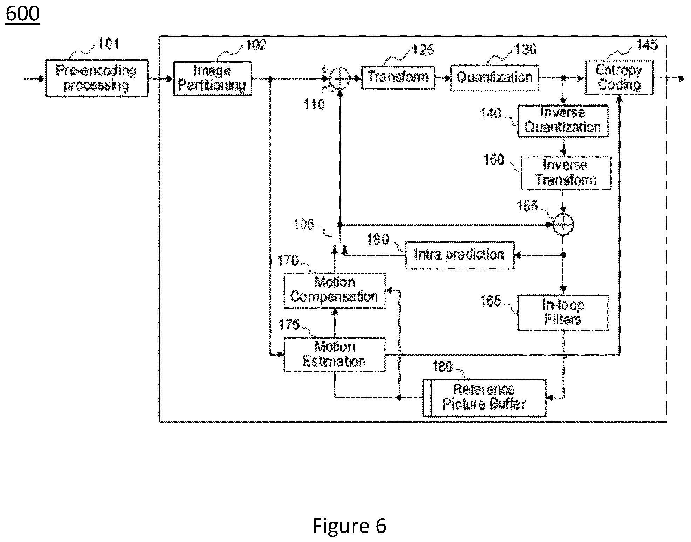

The aspects described and contemplated in this application can be implemented in many different forms. Figures 6, 7, and 8 provide some embodiments, but other embodiments are contemplated and the discussion of Figures 6, 7, and 8 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

Usually, but not necessarily, the term "reconstructed" is used at the encoder side while "decoded" is used at the decoder side.

Various methods are described herein, and each of the methods comprises one or more steps or actions for achieving the described method. Unless a specific order of steps or actions is required for proper operation of the method, the order and/or use of specific steps and/or actions may be modified or combined.

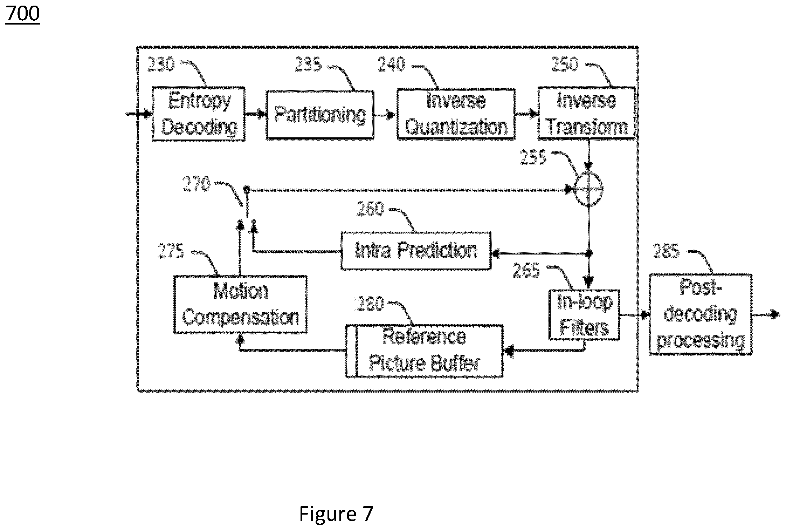

Various methods and other aspects described in this application can be used to modify modules, for example, the intra prediction, entropy coding, and/or decoding modules (160, 260, 145, 230), of a video encoder 100 and decoder 200 as shown in Figure 6 and Figure 7. Moreover, the present aspects are not limited to WC or HEVC, and can be applied, for example, to other standards and recommendations, whether pre-existing or future-developed, and extensions of any such standards and recommendations (including WC and HEVC). Unless indicated otherwise, or technically precluded, the aspects described in this application can be used individually or in combination.

Various numeric values are used in the present application. The specific values are for example purposes and the aspects described are not limited to these specific values.

Figure 6 illustrates an encoder 100. Variations of this encoder 100 are contemplated, but the encoder 100 is described below for purposes of clarity without describing all expected variations.

Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the preprocessing and attached to the bitstream.

In the encoder 100, a picture is encoded by the encoder elements as described below. The picture to be encoded is partitioned (102) and processed in units of, for example, CUs. Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking/SAO (Sample Adaptive Offset) filtering to reduce encoding artifacts. The filtered image is stored at a reference picture buffer (180).

Figure 7 illustrates a block diagram of a video decoder 200. In the decoder 200, a bitstream is decoded by the decoder elements as described below. Video decoder 200 generally performs a decoding pass reciprocal to the encoding pass as described in Figure 6. The encoder 100 also generally performs video decoding as part of encoding video data.

In particular, the input of the decoder includes a video bitstream, which can be generated by video encoder 100. The bitstream is first entropy decoded (230) to obtain transform coefficients, motion vectors, and other coded information. The picture partition information indicates how the picture is partitioned. The decoder may therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image. The filtered image is stored at a reference picture buffer (280).

The decoded picture can further go through post-decoding processing (285), for example, an inverse color transform (e.g. conversion from YcbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

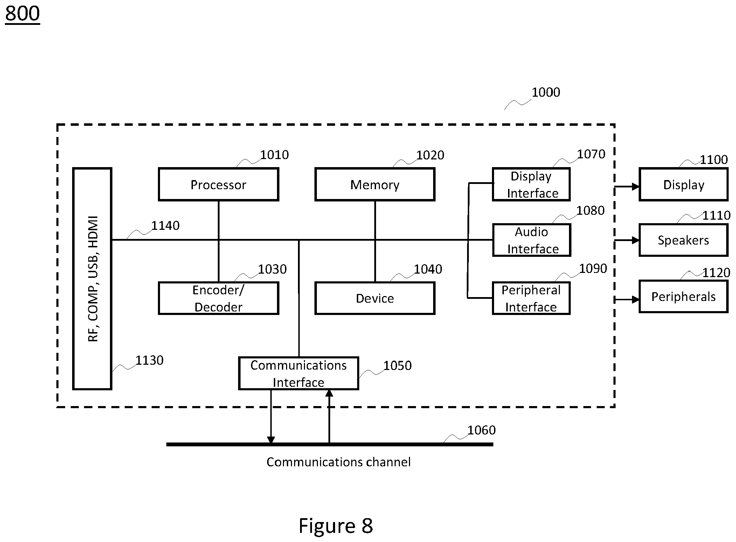

Figure 8 illustrates a block diagram of an example of a system in which various aspects and embodiments are implemented. System 1000 can be embodied as a device including the various components described below and is configured to perform one or more of the aspects described in this document. Examples of such devices include, but are not limited to, various electronic devices such as personal computers, laptop computers, smartphones, tablet computers, digital multimedia set top boxes, digital television receivers, personal video recording systems, connected home appliances, and servers. Elements of system 1000, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1040 can include an internal storage device, an attached storage device (including detachable and non-detachable storage devices), and/or a network accessible storage device, as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1000 can be provided through various input devices as indicated in block 1130. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in Figure 8, include composite video.

In various embodiments, the input devices of block 1130 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface Ics or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1000 can be provided within an integrated housing, Within the integrated housing, the various elements can be interconnected and transmit data therebetween using suitable connection arrangement, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or another device. The display 1100 can also be integrated with other components (for example, as in a smart phone), or separate (for example, an external monitor for a laptop). The other peripheral devices 1120 include, in various examples of embodiments, one or more of a standalone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller (T Con) chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments may refer to parametric models or rate distortion optimization. In particular, during the encoding process, the balance or trade-off between the rate and distortion is usually considered, often given the constraints of computational complexity. It can be measured through a Rate Distortion Optimization (RDO) metric, or through Least Mean Square (LMS), Mean of Absolute Errors (MAE), or other such measurements. Rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of a plurality of transforms, coding modes or flags. In this way, in an embodiment the same transform, parameter, or mode is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

The preceding sections describe a number of embodiments, across various claim categories and types. Features of these embodiments can be provided alone or in any combination. Further, embodiments can include one or more of the following features, devices, or aspects, alone or in any combination, across various claim categories and types:

At least one embodiment comprises performing an analysis of block vectors neighboring a current video block and determining a prediction by blending predictions of at least two predictors using weights based on said analysis.

At least one embodiment comprises the above embodiment and further comprising encoding or decoding the video block using the determined prediction.

At least one embodiment comprises a bitstream or signal that includes one or more of the described syntax elements, or variations thereof.

At least one embodiment comprises a bitstream or signal that includes syntax conveying information generated according to any of the embodiments described.

At least one embodiment comprises creating and/or transmitting and/or receiving and/or decoding according to any of the embodiments described.

At least one embodiment comprises a method, process, apparatus, medium storing instructions, medium storing data, or signal according to any of the embodiments described.

At least one embodiment comprises inserting in the signaling syntax elements that enable the decoder to determine decoding information in a manner corresponding to that used by an encoder.

At least one embodiment comprises creating and/or transmitting and/or receiving and/or decoding a bitstream or signal that includes one or more of the described syntax elements, or variations thereof.

At least one embodiment comprises a TV, set-top box, cell phone, tablet, or other electronic device that performs transform method(s) according to any of the embodiments described.

At least one embodiment comprises a TV, set-top box, cell phone, tablet, or other electronic device that performs transform method(s) determination according to any of the embodiments described, and that displays (e.g., using a monitor, screen, or other type of display) a resulting image.

At least one embodiment comprises a TV, set-top box, cell phone, tablet, or other electronic device that selects, bandlimits, or tunes (e.g., using a tuner) a channel to receive a signal including an encoded image, and performs transform method(s) according to any of the embodiments described.

At least one embodiment comprises a TV, set-top box, cell phone, tablet, or other electronic device that receives (e.g., using an antenna) a signal over the air that includes an encoded image, and performs transform method(s).

**Claims**

1. A method, comprising:

   performing an analysis of block vectors neighboring a current video block;
   determining a prediction by blending predictions of at least two predictors using weights based on said analysis; and,
   encoding the current block using the determined prediction.

2. An apparatus, comprising:

   a memory, and
   a processor, configured to perform:

   performing an analysis of block vectors neighboring a current video block;
   determining a prediction by blending predictions of at least two predictors using weights based on said analysis; and,
   encoding the current block using the determined prediction.

3. A method, comprising:

   performing an analysis of block vectors neighboring a current video block;
   determining a prediction by blending predictions of at least two predictors using weights based on said analysis; and,
   decoding the current block using the determined prediction.

4. An apparatus, comprising:

   a memory, and
   a processor, configured to perform:

   performing an analysis of block vectors neighboring a current video block;
   determining a prediction by blending predictions of at least two predictors using weights based on said analysis; and,
   decoding the current block using the determined prediction.

5. The method of any one of Claims 1 or 3, or the apparatus of any one of Claims 2 or 4, wherein the at least two predictors are used to find two MIP modes.

6. The method of any one of Claims 1 or 3 or 5, or the apparatus of any one of Claims 2, 4 or 5, wherein the at least two predictors also comprise a block vector predictor.

7. The method of any one of Claims 1 or 3 or 5 through 6, or the apparatus of any one of Claims 2 or 4 through 6, wherein a block vector predictor is obtained from a block vector predictor candidate list construction process of intra block copy prediction mode or an intra-TMP prediction mode.

8. The method or the apparatus of Claim 6, wherein the block vector predictor is produced through interpolation.

9. The method or the apparatus of Claim 6, wherein the block vector predictor further involves prediction enhancement.

10. The method or the apparatus of Claim 9, wherein the prediction enhancement comprises local illumination compensation and linear convolution filtering.

11. The method or the apparatus of Claim 6, wherein the block vector predictor is obtained from a previous coding unit in a rotated reference intra block copy prediction mode.

12. A device comprising:

    an apparatus according to Claim 2; and
    at least one of (i) an antenna configured to receive a signal, the signal including a video block, (ii) a band limiter configured to limit the received signal to a band of frequencies that includes the video block, and (iii) a display configured to display an output representative of the video block.

13. A non-transitory computer readable medium containing data content generated according to the method of any one of claims 1, 3, or 5 through 11, or by the apparatus of any one of claims 2, 4, or 5 through 11, for playback using a processor.

14. A signal comprising video data generated according to the method of any one of claims 1, or 3, or 5 through 11, or by the apparatus of any one of claims 2, or 4, or 5 through 11, for playback using a processor.

15. A non-transitory computer program product comprising instructions which, when the program is executed by a computer, cause the computer to carry out the method of any one of claims 1, or 3 or 5 through 11.

0: Planar
1: DC

Figure 1

Figure 2

**300**

301

Start

310

Analysis of block vectors neighboring a current video block

320

Determining a prediction by blending predictions

330

Encoding the current block using the determined prediction

Figure 3

400

```
                    ┌──────────────┐  401
                    │    Start     │
                    └──────────────┘
                            │
                            ▼
        ┌──────────────────────────────────┐  410
        │  Analysis of block vectors        │
        │  neighboring a current video block│
        └──────────────────────────────────┘
                            │
                            ▼
        ┌──────────────────────────────────┐  420
        │      Determining a prediction     │
        │       by blending predictions     │
        └──────────────────────────────────┘
                            │
                            ▼
        ┌──────────────────────────────────┐  430
        │  Decoding the current block using │
        │      the determined prediction    │
        └──────────────────────────────────┘
```

Figure 4

Processor

510

Memory

520

500

Figure 5

Figure 6

700

Figure 7

EP 4 676 029 A1

800

Figure 8

Europäisches
Patentamt
European
Patent Office
Office européen
des brevets

# EUROPEAN SEARCH REPORT

**Application Number**

EP 24 30 6066

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2024/002846 A1 (INTERDIGITAL CE PATENT HOLDINGS SAS [FR]) 4 January 2024 (2024-01-04) * page 38, line 1 - line 12 * * page 39, line 14 - line 19 * ----- | 1-15 | INV. H04N19/105 H04N19/11 |
| Y | XIE (OPPO) Z ET AL: "Non-EE2: derived MIP modes with fusion", 146. MPEG MEETING; 20240422 - 20240426; RENNES; (MOTION PICTURE EXPERT GROUP OR ISO/IEC JTC1/SC29/WG11), , no. m67124 10 April 2024 (2024-04-10), XP030316821, Retrieved from the Internet: URL:https://dms.mpeg.expert/doc_end_user/documents/146_Rennes/wg11/m67124-JVET-AH0058-v1-JVET-AH0058-v1.zip JVET-AH0058-v1.docx [retrieved on 2024-04-10] * the whole document * ----- | 1-15 | |
| A | WO 2024/078596 A1 (DOUYIN VISION CO LTD [CN]; BYTEDANCE INC [US]) 18 April 2024 (2024-04-18) * page 80, line 9 - line 19 * * section 2.29 * ----- | 1-4,6,7, 12-15 | **TECHNICAL FIELDS SEARCHED (IPC)** H04N |
| A | WO 2024/083238 A1 (MEDIATEK INC [CN]) 25 April 2024 (2024-04-25) * page 13, line 2 - line 13 * ----- | 1-4, 12-15 | |

The present search report has been drawn up for all claims

| Place of search | Date of completion of the search | Examiner |
|---|---|---|
| The Hague | 5 December 2024 | Cooke, Edward |

EPO FORM 1503 03.82 (P04C01)

## ANNEX TO THE EUROPEAN SEARCH REPORT
## ON EUROPEAN PATENT APPLICATION NO.

EP 24 30 6066

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2024

| Patent document cited in search report | Publication date | Patent family member(s) | Publication date |
|---|---|---|---|
| WO 2024002846 A1 | 04-01-2024 | NONE | |
| WO 2024078596 A1 | 18-04-2024 | NONE | |
| WO 2024083238 A1 | 25-04-2024 | NONE | |

EPO FORM P0459

For more details about this annex : see Official Journal of the European Patent Office, No. 12/82